# EUROPEAN PATENT APPLICATION

(11) **EP 3 693 550 A1**
(43) Date of publication of application: **12.08.2020**
(21) Application number: 20150781.1
(22) Date of filing: 08.01.2020
(51) Int. Cl.: F01D 5/30

(54) **BLADE FOR A GAS TURBINE ENGINE**

(30) Priority: 07.02.2019 GB 201901683
(71) Applicant: Rolls-Royce plc, London N1 9FX (GB)
(72) Inventor: Bates, Ronald, Derby, Derbyshire DE24 8BJ (GB); Huckerby, Karl, Derby, Derbyshire DE24 8BJ (GB); Walker, Toland, Derby, Derbyshire DE24 8BJ (GB)
(74) Representative: Rolls-Royce plc

(57) **Abstract**

There is disclosed a blade for a gas turbine engine comprising a blade root that is elongate in a longitudinal direction. The blade root comprises a first flank surface and a second flank surface on opposite sides of the blade root that are asymmetrical about a longitudinal mid-plane of the blade root.

## Description

The present disclosure relates to a blade for a gas turbine engine.

In a gas turbine engine, blades are typically mounted on a (rotor) disc of the gas turbine engine and extend generally radially from the disc. The disc is usually secured to a shaft of the gas turbine engine to allow rotation thereof (and of the blades) about a principal rotational axis of the gas turbine engine.

In conventional bladed disc arrangements, a series of circumferentially arranged blades are mounted to the rotor disc. This is typically achieved by providing the blade with a blade root which fits within a slot, e.g. a bedding flank, provided in the disc. The blade root and slot have cooperating shapes such that the blade root may be received by the slot and engage the slot. In particular, during use the blades are spun up in the disc such that forces are transferred between the root and slot via contact surfaces. The contact surfaces on the blade root are to be referred to herein as the flank surfaces of the blade root.

The blade root typically includes at least two flank surfaces; a first flank surface and a second flank surface on opposite sides of the blade root corresponding respectively to a suction side and a pressure side of the blade, for example. The first and second flank surfaces are typically machined parallel to each other in the longitudinal direction of the blade root, to provide flank surfaces that run longitudinally parallel, and are therefore symmetrical about a longitudinal mid-plane of the blade. The contact surfaces of the disc slot are correspondingly machined parallel to each other in the longitudinal direction of the slot.

It is desired to provide a blade having an improved blade root arrangement.

According to a first aspect of the disclosure, there is provided a blade for a gas turbine engine, the blade comprising a blade root that is elongate in a longitudinal direction; wherein: the blade root comprises a first flank surface and a second flank surface for engaging a slot of the rotor disc; and the first flank surface and the second flank surface are asymmetrical about a longitudinal mid-plane of the blade root.

The Applicants have recognised that the distribution of loads across a blade root, in use, is typically inconsistent or asymmetric about at least a longitudinal mid-plane of the blade root, which causes the blade root to move, e.g. rotate, within the slot. For example, when a conventional blade is spun up by the rotor disc, there is a tendency for the blade to twist due to a moment force induced, e.g. because the centre-of-gravity of the blade is not in line with the geometric centre of the blade. For blade roots having flank surfaces that are symmetrical about the longitudinal mid-plane of the blade root, e.g. because they run parallel to each other in the longitudinal direction, this results in an uneven pressure between the flank surfaces and the corresponding contact surfaces of the disc slot. This may cause localised, high-stress regions and low-stress regions to form on the ends of the flank surfaces in the longitudinal directions, which have been found by the Applicant to be more susceptible to failure (e.g. cracking).

By providing asymmetrical flank surfaces in accordance with the technology described herein, the outer geometry (or shape) of the blade root may be tailored to the particular loading conditions that it is expected to face during use. For example, the flank surfaces may be skewed differently with respect to the longitudinal direction of the blade root to control contact between the flank surfaces and corresponding contact surfaces of the slot, to control the stress distribution across the flank surfaces. This may reduce the formation of localised, high-stress regions at the longitudinal ends of the flank surfaces (by bringing them inboard towards the longitudinal centre of the blade root) and therefore reduce the risk of failures occurring, thereby increasing the life of the blade.

The first flank surface may have a first linear longitudinal extent that is oblique to the longitudinal direction of the blade root. In this way, the first flank surface may have a radial extent from an aerofoil surface of a platform of the blade that varies along the longitudinal direction. This may provide a non-uniform mass distribution of material forming the flank surface, thereby allowing an optimal shape to be chosen to allow stress to be reduced in the regions of concern with little or no increase in mass when compared to the mass of a conventional flank surface. As the mass is not increased, overall life and integrity of the blade is not compromised, yet the root stresses are reduced.

The second flank surface may have a second linear longitudinal extent that is oblique to the longitudinal direction of the blade root. In this way, the second flank surface may have a radial extent from an aerofoil surface of a platform of the blade that varies along the longitudinal direction. Again, this may provide a non-uniform mass distribution of material forming the flank surface, thereby allowing an optimal shape to be chosen to allow stress to be reduced in the regions of concern with little or no increase in mass when compared to the mass of a conventional flank surface. As the mass is not increased, overall life and integrity of the blade is not compromised, yet the root stresses are reduced.

The first linear longitudinal extent and the second linear longitudinal extent may be oblique to the longitudinal direction by different angles. In this way, the radial extents of the first flank surface and the second flank surface may vary along the longitudinal direction asymmetrically about the longitudinal mid-plane. This may allow optimal matching between the flank surfaces and the corresponding surfaces of the disc slot.

A first normal vector of the first flank surface and a second normal vector of the second flank surface may have different angular orientations with respect to a transverse plane of the blade root. The term angular orientation is to be construed as including not only orientations that are angularly offset from the transverse plane, but also orientations that have zero angular offset from the transverse plane, i.e. orientations that are parallel with the transverse plane.

The first normal vector and the second normal vector may be inclined in different directions from the transverse plane. In other words, they may slope in different directions. This may maximise the correspondence between flank surface and the corresponding contact surface of the slot.

The first normal vector and the second normal vector may be inclined from the transverse plane by the same angle. This arrangement may allow an optimal shape to be chosen to allow stress to be reduced in the regions of concern, while ensuring an even distribution of mass on both sides of the transverse plane. This may improve the balance of the root when inserted in the slot, in use.

The first normal vector and the second normal vector may be inclined from the transverse plane by different angles.

The first normal vector may be inclined from the transverse plane toward a trailing edge side of the blade. The second normal vector may be inclined from the transverse plane toward a leading edge side of the blade.

One of the first normal vector and the second normal vector may be parallel with the transverse plane in that it has a zero angular displacement from the transverse plane. The other one of the first normal vector and the second normal vector may be inclined from the transverse plane.

The first flank surface may be on the suction side of the blade root and the second flank surface may be on the pressure side of the blade root.

The first flank surface may have a first region and the second flank surface may have a second, longitudinally corresponding region on opposite sides of the longitudinal mid-plane. The first region may be configured to experience a higher stress than the second region. The first region may have a radial extent from an aerofoil surface of a platform of the blade that is greater than that of the second region.

The blade may be a compressor blade for a gas turbine engine.

According to a second aspect of the disclosure, there is provided a rotor disc assembly comprising a rotor disc and at least one blade as described in any one of the preceding statements.

According to a third aspect of the disclosure, there is provided a gas turbine engine comprising a blade or a rotor disc assembly as described in any one of the preceding statements.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 shows four separate views of a compressor blade in accordance with an aspect of the present disclosure; and
Figure 5 shows four separate views of the compressor blade of Figure 4.

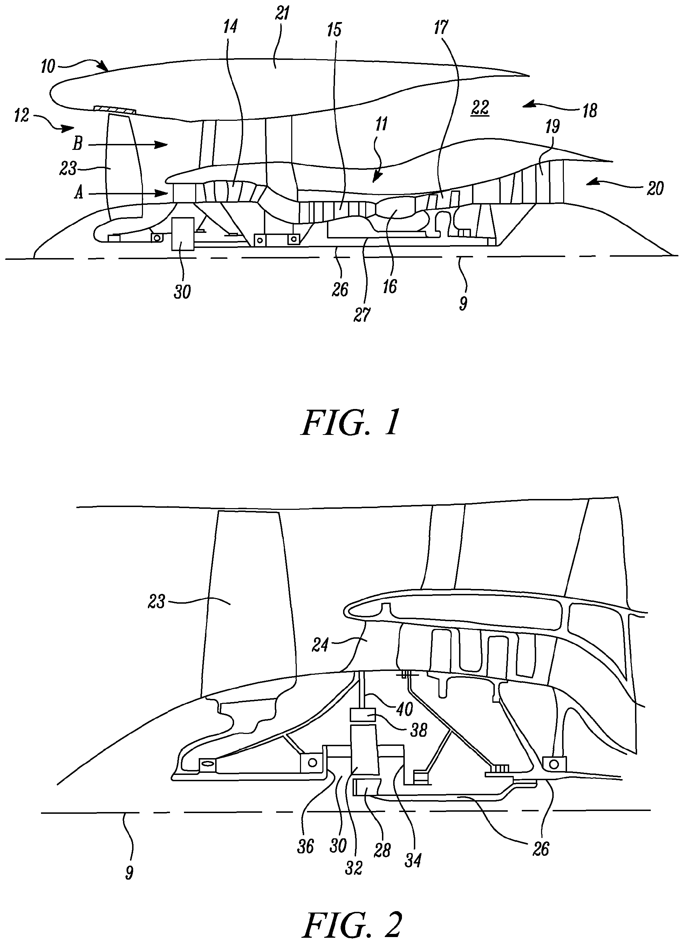

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

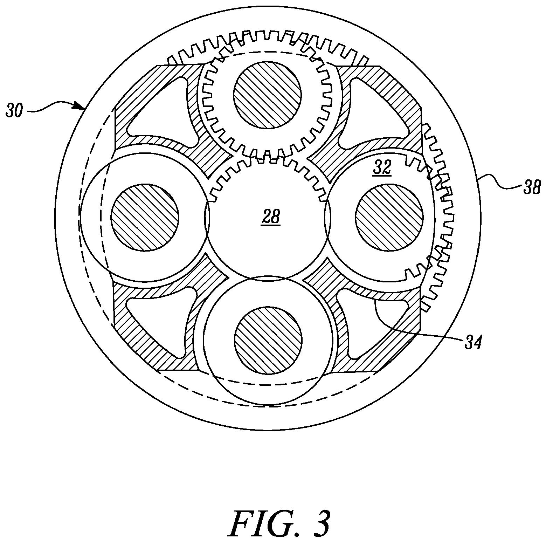

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

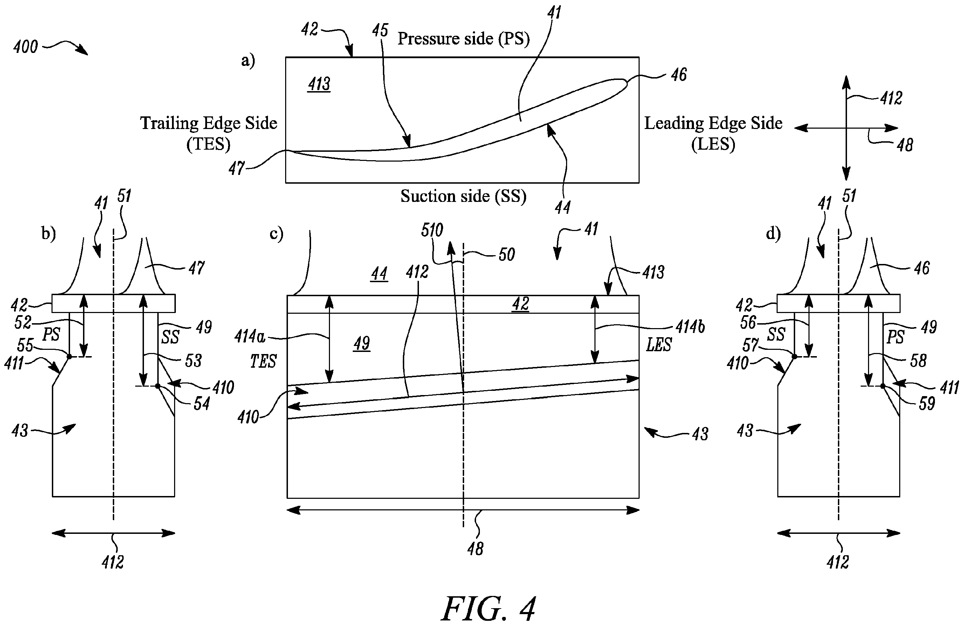

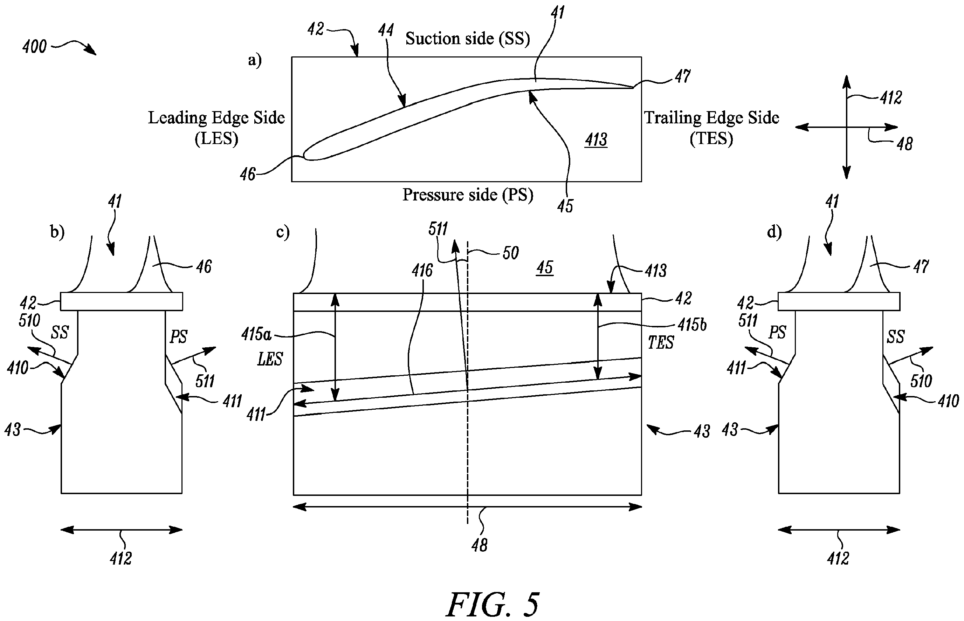

Figures 4 and 5 each shows four partial views of the same rotor blade 400, in accordance with an aspect of the present disclosure. In particular, Figure 4a shows a top view of the rotor blade 400, Figure 4b shows a rear view of the rotor blade 400, Figure 4c shows a side view of a suction side of the rotor blade 400 and Figure 4d shows a front view of the rotor blade 400. Figure 5a shows a top view of the rotor blade 400, Figure 5b shows a front view of the rotor blade 400, Figure 5c shows a side view of a pressure side of the rotor blade 400 and Figure 5d shows a rear view of the rotor blade 400.

Referring to both Figures 4 and 5, there is generally shown a compressor blade 400 to be used in one or more of the low pressure compressor 14 and the high-pressure compressor 15 described above with respect to Figure 1, for example. The compressor blade 400 comprises an aerofoil portion 41, a platform 42 and a blade root 43. The blade 400 is generally radially extending with the aerofoil portion 41 extending radially outwards from the platform 42 and the blade root 43 radially extending inwards from the platform 42.

The aerofoil 41 is generally in the shape of a wing in cross-section and includes a convex, suction surface 44, which is associated with fluid flows of higher velocity and lower static pressure, and a concave, pressure surface 45, which is associated with fluid flows of a comparatively lower velocity and higher static pressure than the suction surface 44. The aerofoil 41 is shaped to define a leading edge 46 which is the point at the axially forwardmost part of the blade 400 (in terms of the principal rotational axis 9 of the engine 10) that has maximum curvature. At the axially rearwardmost part of the blade 400 is a trailing edge 47 which is the point of maximum curvature at the rear of the aerofoil 41.

The blade root 43 itself is elongate in a longitudinal direction 48 between a trailing edge side (i.e. the side of the blade 400 corresponding to the trailing edge 47 of the aerofoil 41) and a leading edge side of the blade 400 (i.e. the side of the blade 400 corresponding to the leading edge 46 of the aerofoil 41). The longitudinal direction 48 defines the shortest straight line path between the trailing edge side and the leading edge side of the blade 400. The blade root 43 includes a neck portion 49 which is comparatively narrower in the transverse direction 412 perpendicular to and crossing the longitudinal direction 48, as compared to the rest of the blade root 43 and the platform 42.

Although not shown, the compressor blade 400 is attached in use to a compressor disc by locating and securing the blade root 43 within a slot provided in the compressor disc. The root 43 is configured to be inserted into a slot such that its longitudinal direction 48 moves parallel to a longitudinal direction of the slot. The slot is shaped so as to receive the root 43 of the blade 400 and the root 43 engages the slot. As mentioned above, during use forces are transferred between the root 43 and slot via the flank surfaces and contact surfaces, respectively. In particular, during use the blade 400 will experience centrifugal forces acting radially outwardly on the blade 400 due to rotation of the disc, but will be retained to the disc by virtue of the engagement between flank surfaces of the blade root 43 and the contact surfaces of the slot.

As best shown in Figure 4, the blade root 43 has a first flank surface 410 on the suction side of the blade 400, extending between the trailing edge side and the leading edge side of the blade root 43. The first flank surface 410 is angled with respect to the transverse direction 412 in that a normal vector taken at a point on the surface is oblique to the transverse direction 412. As best shown in Figure 5, the blade root 43 also has a second flank surface 411 on the pressure side of the blade 400, extending between the trailing edge side and the leading edge side of the blade root 43. The second flank surface 411 is also angled with respect to the transverse direction 412 in that a Normal vector taken at a point on the surface is oblique to the transverse direction 412. The first flank surface 410 and the second flank surface 411 are planar in the arrangement illustrated by Figures 4 and 5. However, it will be appreciated that the first flank surface 410 and the second flank surface 411 may instead be curved, for example.

Conventionally, both the first and second flank surfaces 410, 411, although angled with respect to the transverse direction 412, would extend parallel to each other in a longitudinal direction 48 of the blade root 43. In that sense, the first and second flank surfaces 410, 411 may be referred to as symmetrical about a longitudinal mid-plane of the blade root. However, as mentioned above, this arrangement is not particularly suitable for evenly distributing the loads from the aerofoil portion across the flank surfaces, given that the loads themselves are not symmetrical about the longitudinal mid-plane.

For the blade shown in Figures 4 and 5, the load from the aerofoil 41 at the leading edge side of the blade root 43 is greater on the pressure side of the blade root 43 (as compared to the suction side) whereas the load at the trailing edge side of the blade root 43 is greater on the suction side (as compared to the pressure side), and accordingly the geometry of the flank surfaces 410, 411 are designed to accommodate for this. In particular, the blade of the technology described herein has flank surfaces 410, 411 that are asymmetrical about a longitudinal mid-plane 51 that is perpendicular to and crosses the longitudinal direction 48 of the blade root 43, as will now be described further.

The longitudinal mid-plane 51 bisects the blade root 43 such that the distances along the normal from the longitudinal mid-plane to the furthest, outer edges of the blade root 43 (i.e. to the parallel sides at the outer edges of the blade root 43, such as the sides of the platform 42 or neck portion 49) are the same on both sides of the longitudinal mid-plane 51. The first and second flank surfaces 410, 411 are asymmetrical in that the outer geometry or shape of the flank surfaces differs on opposite sides of the longitudinal mid-plane 51. In particular, a radial extent 53 of the first flank surface 410 at a position 54 on the suction side of the longitudinal mid-plane 51 is greater in magnitude as compared to a radial extent 52 of the second flank surface 411 at a corresponding position 55 on the pressure side of the longitudinal mid-plane 51. Correspondingly, a radial extent 56 of the first flank surface 410 at a position 57 on the suction side of the longitudinal mid-plane 51 is smaller in magnitude as compared to a radial extent 58 of the second flank surface 411 at a corresponding position 59 on the pressure side of the longitudinal mid-plane 51. The positions at which the radial extents are measured correspond in that they are equidistant from the longitudinal mid-plane 51 in the transverse direction 412.

The first and second flank surfaces 410, 411 are also asymmetrical about the longitudinal mid-plane 51 in that they do not extend parallel to each other in the longitudinal direction, and this is achieved by introducing an offset between the two surfaces by modifying their relative slopes and thus radial extents. By controlling the slope of each surface, the contact between blade and disc can be modified to control stress concentration between the blade and disc at engine running conditions, thereby maximising blade life.

As best shown in Figure 4, the first flank surface 410 has a first linear longitudinal extent 412 that is at an oblique angle, preferably within the range of 0 to 0.5 degrees, e.g. 0.025 degrees, to the longitudinal direction 48 of the blade root 43. In particular, the shape of the first flank surface 410 is such that any straight line taken between two points at opposite ends of the first flank surface 410 in the longitudinal direction 48 is skewed with respect to the longitudinal direction. In this way, the blade root 43 is shaped such that the first flank surface 410 has a radial extent 414 from the aerofoil surface 413 of the platform 42 that varies in magnitude in the longitudinal direction 48. For example, a radial extent 414a of a region nearer the trailing edge side of the blade root 43 (than the leading edge side) is greater than a radial extent 414b of a region towards the leading edge side.

The first flank surface can be said to be asymmetrical about a transverse plane 50 that is perpendicular to and crosses the longitudinal direction 48 and bisects the blade root 43. The transverse plane 50 bisects the blade root 43 such that the distances along the normal from the transverse plane 50 to the furthest edges of the blade root 43 (i.e. to the parallel sides at the outer edges of the blade root 43, such as the trailing edge side and the leading edge side of the platform 42 or neck portion 49) are the same on both sides of the transverse plane 50. The radial extent 414a of the first flank surface 410 at a position on a first side of the transverse plane 50 differs in magnitude as compared to a radial extend 414b of the first flank surface 410 at a corresponding position on the opposite side of the transverse plane 50. The positions at which the radial extents are measured correspond in that they are equidistant from the transverse plane 50 in the longitudinal direction.

With reference to Figure 5, the second flank surface 411 is similarly shaped in that it has a first linear longitudinal extent 416 that is at an oblique angle, preferably within the range of 0 to 0.5 degrees, e.g. 0.025 degrees, to the longitudinal direction 48 of the blade root 43. Any straight line taken between two points at opposite ends of the second flank surface 411 in the longitudinal direction 48 is skewed with respect to the longitudinal direction 48. In this way, the second flank surface 411 has a radial extent 415 from the aerofoil surface 413 of the platform 42 that varies in magnitude in the longitudinal direction 48. For example, a radial extent 415a of a region nearer the leading edge side of the blade root 43 (than the trailing edge side) is greater than a radial extent 415b of a region towards the trailing edge side.

The second flank surface 411 can also be said to be asymmetrical about the transverse plane 50. That is, the radial extent 415a of the second flank surface 411 at a position on a first side of the transverse plane 50 differs in magnitude to that 415b of a corresponding position on the second flank surface 411 on the opposite side of the transverse plane 50.

In the arrangement of Figures 4 and 5, the first flank surface 410 and the second flank surface 411 have linear longitudinal extents that are skewed from the longitudinal direction 48 by the same angle. However, to maintain asymmetry about the longitudinal mid-lane 51 the radial extents 414, 415 of the first and second surfaces 410, 411 vary or taper in opposite directions. Particularly, the radial extent 414 of the first surface 410 on the suction side of the blade root 43 tapers from a first side, i.e. the trailing edge side, towards a second, opposite side, i.e. the leading edge side, of the blade root, for a constant distance from the longitudinal mid-plane 51. The radial extent 415 of the second surface 411 on the pressure side of the blade root 43 tapers from the second side, i.e. the leading edge side, towards the second, opposite side, i.e. the trailing edge side, of the blade root, for a constant distance from the longitudinal mid-plane 51.

The degree and direction of slope of the flank surfaces 410, 411 can be defined by the angular orientations of their respective normal vectors 510, 511, with respect to the transverse plane 50 of the blade root 43.

As best illustrated in Figure 4c, the first flank surface 410 has a first normal vector 510 that is perpendicular to the first flank surface 410. The first flank surface 410 is skewed with respect to the longitudinal direction 48 of the blade root 43 as described above such that the first normal vector 510 is inclined at an angle from the transverse plane 50 in a direction towards the trailing edge of the blade root 43. The second flank surface 411, meanwhile, has a second normal vector 511 that is perpendicular to the second flank surface 411 that is inclined at an angle from the transverse plane 50 in a direction towards the leading edge of the blade root 43. The first normal vector 510 and the second normal vector 511 are inclined from the transverse plane by the same angle, although it will be appreciated that they may instead be inclined from the transverse plane by different angles.

Although the blade shown in Figures 4 and 5 has been described with respect to the load from the aerofoil 41 at the leading edge side of the blade root 43 being greater on the pressure side of the blade root 43 and the load at the trailing edge side of the blade root 43 is greater on the suction side, this is not required. It will be appreciated that this loading condition is provided as an example of one arrangement only, and that the expected loading conditions will differ on a blade-by-blade basis, and the precise geometry and degree of skew of the flank surfaces will therefore depend on the particular application and expected loading conditions.
Furthermore, it will be appreciated that although the blade of the technology described herein has been described as having flank surfaces that slope in different directions, this is not required. The flank surfaces could instead slope in the same direction, but with different angular offsets from the longitudinal direction of the blade root. Further, one of the flank surfaces may extend longitudinally parallel with the longitudinal direction of the blade root, such that its normal vector is parallel with the transverse plane, while the other flank surface may be skewed to the longitudinal direction such that its normal vector is inclined from the transverse plane.

While the description refers to only two flank surfaces, this is not required. A blade root may have any number of pairs of flank surfaces and there may be an asymmetry in one or more or all of those pairs of lobes.

It has been described that the blade of the technology described herein is a compressor blade. However, it should be noted that any suitable rotor blade could be provided with one or more skewed flank surface(s). For example, the blade of the technology described herein may be a turbine blade, for use in the high-pressure turbine 17 and/or low pressure turbine 19 described above with respect to Figure 1.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A blade (400) for use with a rotor disc of a gas turbine engine (10), the blade (400) comprising a blade root (43) that is elongate in a longitudinal direction (48); wherein:
the blade root (43) comprises a first flank surface (410) and a second flank surface (411) for engaging a slot of the rotor disc; and
the first flank surface (410) and the second flank surface (411) are asymmetrical about a longitudinal mid-plane (51) of the blade root (43).

2. The blade as claimed in Claim 1, wherein the first flank surface (410) has a first linear longitudinal extent (412) that is oblique to the longitudinal direction (48) of the blade root (43), such that the first flank surface (410) has a radial extent (414) from an aerofoil surface (413) of a platform (42) of the blade that varies along the longitudinal direction (48).

3. The blade as claimed in Claim 1 or Claim 2, wherein the second flank surface (411) has a second linear longitudinal extent (416) that is oblique to the longitudinal direction (48) of the blade root (43), such that the second flank surface (411) has a radial extent (415) from an aerofoil surface (413) of a platform (42) of the blade that varies along the longitudinal direction (48).

4. The blade as claimed in Claim 2 and Claim 3, wherein the first linear longitudinal extent (412) and the second linear longitudinal extent (416) are oblique to the longitudinal direction (48) by different angles, such that the radial extents (414, 415) of the first flank surface (410) and the second flank surface (411) vary along the longitudinal direction (48) asymmetrically about the longitudinal mid-plane (51).

5. The blade as claimed in any one of the preceding claims, wherein a first normal vector (510) of the first flank surface (410) and a second normal vector (511) of the second flank surface (411) have different angular orientations with respect to a transverse plane (50) of the blade root (43).

6. The blade as claimed in Claim 5, wherein the first normal vector (510) and the second normal vector (511) are inclined in different directions from the transverse plane (50).

7. The blade as claimed in Claim 6, wherein the first normal vector (510) and the second normal vector (511) are inclined from the transverse plane (50) by the same angle.

8. The blade as claimed in Claim 5 or Claim 6, wherein the first normal vector (510) and the second normal vector (511) are inclined from the transverse plane (50) by different angles.

9. The blade as claimed in Claim 6 or Claim 7, or Claims 6 and 8, wherein:
the first normal vector (510) is inclined from the transverse plane (50) toward a trailing edge side of the blade; and
the second normal vector (511) is inclined from the transverse plane (50) toward a leading edge side of the blade.

10. The blade as claimed in Claim 5, wherein:
one of the first normal vector (510) and the second normal vector (511) is parallel with the transverse plane (50) in that it has a zero angular displacement from the transverse plane (50); and
the other one of the first normal vector (510) and the second normal vector (511) is inclined from the transverse plane (50).

11. The blade as claimed in any one of the preceding claims, wherein the first flank surface (410) is on the suction side of the blade root (43) and the second flank surface (411) is on the pressure side of the blade root (43).

12. The blade as claimed in any one of the preceding claims, wherein:
the first flank surface (410) has a first region (54) and the second flank surface (411) has a second, longitudinally corresponding region on opposite sides of the longitudinal mid-plane (51);
the first region (54) is configured to experience a higher stress than the second region (55); and
the first region (54) has a radial extent (53) from an aerofoil surface (413) of a platform (42) of the blade that is greater than that of the second region (55).

13. The blade as claimed in any one of the preceding claims, wherein the blade is a compressor blade for a gas turbine engine (10).

14. A gas turbine engine (10) comprising a blade as claimed in any one of Claims 1 to 13.

15. The gas turbine engine (10) as claimed in Claim 14, further comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.
